(19) Europäisches Patentamt / European Patent Office / Office européen des brevets

(11) **EP 2 952 481 A1**

(12) **EUROPEAN PATENT APPLICATION**

(43) Date of publication:
**09.12.2015 Bulletin 2015/50**

(51) Int Cl.:
***C02F 1/00*** (2006.01) ***C02F 1/42*** (2006.01)
***C02F 1/28*** (2006.01)

(21) Application number: **14171480.8**

(22) Date of filing: **06.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Brita GmbH**
**65232 Taunusstein (DE)**

(72) Inventors:
• **Weidner, Peter**
**92444 Rötz (DE)**

• **Bubinger, Michael**
**65479 Raunheim (DE)**
• **Buiter, Joris**
**65232 Taunusstein (DE)**

(74) Representative: **van Lookeren Campagne, Constantijn August**
**Meisnner Bolte & Partner GbR**
**Bankgasse 3**
**90402 Nürnberg (DE)**

(54) **Method and system for monitoring the operation of a liquid treatment apparatus including a replaceable liquid treatment cartridge**

(57)     A liquid treatment apparatus (1) includes a replaceable liquid treatment cartridge (3) including at least one liquid treatment part (12) including at least an amount of ion exchange material. The liquid treatment apparatus (1) includes a head device (2) for receiving the replaceable liquid treatment cartridge (3), the head device (2) including at least one liquid inlet (4) and at least one liquid outlet (5) and being arranged to conduct at least a fraction of liquid received through the at least one liquid inlet (4) to at least one of the liquid outlets (5) via the liquid treatment cartridge (3) such as to pass through at least a certain one of the liquid treatment parts (12). A method of monitoring the operation of the liquid treatment apparatus (1) includes obtaining first data ($M_{init}, RC$), the first data ($M_{init}, RC$) being representative of a remaining capacity of the certain liquid treatment part (12) in terms of an amount of substance. Second data ($CH$) including data representative of a value at at least one point in time of a measure of a concentration of components removable by the liquid treatment part (12) in liquid received through the at least one liquid inlet (4) and representative of a value of the measure at at least one point in time is obtained. Output data ($RC, RV, RT, OT$) is obtained. A device (20) for implementing a human-machine interface is enabled to provide perceptible output pertaining to replacement of the liquid treatment cartridge (3) and based on at least some of the output data ($RC, RV, RT, OT$). Obtaining the output data ($RC, RV, RT, OT$) includes using the first and second data ($CH$) to calculate a value of at least one parameter ($RV, RT_2$) such that the value is proportional to the remaining capacity and inversely proportional to the measure of the concentration of components removable by the liquid treatment part.

Fig. 1

**Description**

The invention relates to a method of monitoring the operation of a liquid treatment apparatus including
a replaceable liquid treatment cartridge including at least one liquid treatment part including at least an amount of ion exchange material; and
a head device for receiving the replaceable liquid treatment cartridge, the head device including at least one liquid inlet and at least one liquid outlet and being arranged to conduct at least a fraction of liquid received through the at least one liquid inlet to at least one of the liquid outlets via the liquid treatment cartridge such as to pass through at least a certain one of the liquid treatment parts, the method including:

obtaining first data, the first data being representative of a remaining capacity of the certain liquid treatment part in terms of an amount of substance,
obtaining second data including data representative of a value at at least one point in time of a measure of a concentration of components removable by the liquid treatment part in liquid received through the at least one liquid inlet ,
obtaining output data, and
enabling a device for implementing a human-machine interface to provide perceptible output pertaining to replacement of the liquid treatment cartridge and based on at least some of the output data.

The invention also relates to a system for monitoring the operation of a liquid treatment apparatus, the liquid treatment apparatus including:

a replaceable liquid treatment cartridge including at least one liquid treatment part including at least an amount of ion exchange material; and
a head device for receiving the replaceable liquid treatment cartridge, the head device including at least one liquid inlet and at least one liquid outlet and being arranged to conduct at least a fraction of liquid received through the at least one liquid inlet to at least one of the liquid outlets via the liquid treatment cartridge such as to pass through at least a certain one of the liquid treatment parts,
wherein the system includes:

an interface for receiving first data, the first data being representative of a remaining capacity of the certain liquid treatment part in terms of an amount of substance;
an interface to a system for obtaining values of a parameter of liquid led through the head device, the data provided through the interface enabling the monitoring system to obtain second data including data representative of a value at at least one point in time of a measure of the concentration of components removable by the liquid treatment part in liquid received through the at least one liquid inlet;
an interface to a device for implementing a human-machine interface; and
a data processing device,
wherein the system is configured to obtain output data and to enable the device for implementing the human-machine interface to provide perceptible output pertaining to replacement of the liquid treatment cartridge and based on at least some of the output data.

The invention also relates to a liquid treatment apparatus.
The invention also relates to a computer program.
WO 2014/033145 A1 discloses a liquid treatment system including a filter head and a replaceable liquid treatment cartridge. Mechanical interfaces on the filter head and liquid treatment cartridge enable the latter to be mechanically connected to the filter head in an essentially fluid-tight manner. A first fraction of untreated water entering the filter head passes through the liquid treatment cartridge along a first fluid path. A fall tube is arranged to deliver the fraction of water led along the first fluid path to a first bed of liquid treatment medium. The first bed of liquid treatment medium includes an ion exchange material, for example in the form of ion exchange resin beads, that is at least initially in the hydrogen form. The liquid treatment cartridge is provided with a machine-readable tag. The filter head includes a device for reading information from the machine-readable tag of a liquid treatment cartridge mechanically connected to the filter head. Data stored on the tag include at least one of an identification of the liquid treatment cartridge, an identification of the type of liquid treatment medium of the first bed, an identification of the type of liquid treatment medium of a second bed, a unique identification of the liquid treatment cartridge and data representative of a degree of use of the liquid treatment cartridge or a degree of exhaustion of the liquid treatment media. The latter can be updated by writing the data to the tag during use of the liquid treatment cartridge. The filter head further includes a data processing unit and memory. The data processing unit receives data from a flow meter arranged to measure at least one of the volumetric rate of flow and the accumulated volume that has passed through the filter head. A further interface includes at least one of a human-machine interface and a data exchange interface. The further interface can be used to provide at least one of data representative of the actual carbonate hardness of the water downstream of the liquid treatment cartridge and/or of the untreated water, data indicating the level of exhaustion of the liquid treatment medium in the first bed of the liquid treatment cartridge and data indicating that a certain level of exhaustion has been reached. The data processing unit uses second parameters in the form of first and second use measures to track the state of the liquid treatment cartridge. The first use measure is simply the total volume of water that has passed through the first bed. A second use measure forming a second parameter is a weighted integral of the volumetric flow rate of the water that has passed through the first bed. The flow rate is weighted with the temporary hardness of the untreated water. The current value of the second use measure is continually updated using a best available measure of the carbonate hardness of the untreated water. In an embodiment, this value is also written to the tag at regular intervals. On reaching a pre-determined maximum value, a signal to replace the liquid treatment cartridge is provided.

A problem of using the second use measure and providing a signal when a pre-determined maximum value has been reached is that replacement liquid treatment cartridges are typically installed by service technicians, whose visits need to be scheduled. It would be possible to use a maximum value corresponding to a particular fraction of the total initially available treatment capacity, but this might still result in the replacement liquid treatment cartridge's arriving too early or too late.

It is an object of the invention to provide a method, system, apparatus and computer program of the types defined above that allow for relatively good timing of replacement of the liquid treatment cartridge.

This object is achieved according to a first aspect by the method according to the invention, which is characterised in that obtaining the output data includes using the first and second data to calculate a value of at least one parameter such that the value is proportional to the remaining capacity and inversely proportional to the measure of the concentration of components removable by the liquid treatment part.

The replaceable liquid treatment cartridge includes at least one liquid treatment part that includes an amount of ion exchange material. The head device includes at least one liquid inlet and at least one liquid outlet, configured to enable the head device to be mounted in a conduit between a source of untreated liquid and an appliance. A mechanical interface between the replaceable liquid treatment cartridge and the head device allows for quick-release connection of the latter to the head device, such that the liquid treatment cartridge can be replaced relatively easily. The mechanical interface is arranged such that liquid-tight connections for the transfer of liquid between at least one outlet of the head device and a respective associated inlet of the cartridge and between at least one outlet of the cartridge and a respective associated inlet of the head device are established when the liquid treatment cartridge is locked to the head device. The locking mechanism allows the liquid treatment cartridge to be released relatively easily. The head device by contrast is connected in a relatively permanent manner at the liquid inlet and outlet. The head device is arranged to conduct at least a fraction of liquid received through the liquid inlet to the liquid outlet such as to pass through the or a certain one of the liquid treatment parts in the liquid treatment cartridge that include ion exchange material. Thus, the liquid is treated by ion exchange, in the course of which the treatment capacity of the ion exchange material is gradually exhausted as the counterions with which the ion exchange material is originally loaded are replaced by counterions removed from the liquid. Where, for example, the liquid is water, the liquid treatment part may be arranged to soften the water, i.e. remove the minerals contributing to total hardness. The liquid treatment part may alternatively be arranged to decarbonise the water, i.e. remove minerals contributing to temporary or carbonate hardness (principally calcium and magnesium carbonate). First data is representative of a remaining capacity of the certain liquid treatment part to treat liquid by ion exchange. The capacity is in terms of an amount of substance, that is a measure of the number of active sites still available for binding the ion species to be removed from the liquid. The first data may be a direct measure, e.g. expressed in moles or equivalent mass of a particular mineral of which the concentration is reduced by the treatment. It may alternatively comprise a combination of a value representing an initial capacity (expressed in the same way) and a value representative of a remaining or of an exhausted fraction of the initial capacity. By using a measure of the capacity in terms of an amount of substance, the measure characterises the certain liquid treatment part independently of the conditions under which it is currently being operated, in particular the characteristics of the liquid being treated. Thus, the value of the measure remains meaningful when the cartridge is removed from the head device before it reaches the end of its useful life and is placed in a different liquid treatment apparatus. However, such a measure is of relatively little use to a user or service technician, because knowing the remaining capacity does not enable one to predict when the liquid treatment cartridge is due for replacement. The second data characterises the conditions under which the liquid treatment cartridge is being operated in the liquid treatment apparatus in which it is currently installed. It may be a measure in terms of a concentration of the components in amount of substance per unit volume. The monitoring method includes at least a calculation equivalent to or corresponding to dividing the remaining capacity by a variable based on the concentration. The variable may in fact correspond to the concentration. Alternatively, the variable by which the capacity is divided may be proportional also to a volumetric rate of flow of liquid through the liquid inlet (or the liquid outlet), so that the result of the calculation is indicative of a remaining lifetime of the liquid treatment cartridge. By enabling a device for implementing a human-machine interface to provide perceptible output pertaining to replacement of the liquid treatment data and based on at least some of the output data, including at least one of the parameter values, the method can allow a user or service technician to schedule the replacement of the liquid treatment cartridge relatively accurately. The output data is based on both the local conditions and the current state of the liquid treatment cartridge expressed in terms independent of its current use.

It is noted that the device for implementing a human-machine interface may be local to the liquid treatment apparatus or located remotely. The output data or a version of the output data may be provided concurrently to multiple such devices, e.g. one local and one remote. The perceptible output may be directly representative of the value of the at least one parameter or those of a sub-set of the parameters, in particular having the same information content. It may alternatively or additionally comprise an early warning signal based on the output data. Different devices may provide different types of perceptible output based on the output data calculated in accordance with the method. In one variant, the at least one device for implementing the human-machine interface is caused to provide the perceptible output pertaining to replacement of the liquid treatment cartridge and based on at least some of the output data. That is to say that it is triggered to do so by a signal, which may be a signal carrying only a new value of the information to be output. Alternatively, the determination of whether to provide the perceptible output may be made autonomously by one or more of the devices implementing the human-machine interface.

The second data is obtained from a system for determining the at least one value of the measure of the concentration of components removable by the liquid treatment part. In a variant, the system that generates the second data includes at least one sensor device for determining at least one value of a parameter enabling the system to generate the second data. For example, the sensor device may determine the electrical conductivity of the liquid received at the liquid inlet. The system may further include a temperature sensor to adjust for the temperature dependency of the relation between the electrical conductivity and the mineral concentration. The sensor device may alternatively be an ion-selective sensor.

In an embodiment, obtaining the output data includes determining a value of a remaining treatable volume of liquid providable through the at least one liquid outlet, and at least one of enabling and causing the value of the remaining treatable volume to be provided as perceptible output through the human-machine interface.

Thus, an operator, service provider or supplier of replacement liquid treatment cartridges, is provided with information enabling him or her to schedule replacement of the liquid treatment cartridge on the basis of the information provided as perceptible output and knowledge of the average liquid consumption per unit of time (e.g. per day or week). In an embodiment, the remaining treatable volume may be negative. This facilitates error tracing when it is determined that the liquid provided at the liquid outlet does not meet certain specifications or that an appliance is not functioning correctly. It also allows additional maintenance to be carried out on such an appliance. In the case of water treatment for example, the need to carry out a descaling operation can be determined, e.g. if the remaining treatable volume has a relatively large negative value.

In an embodiment, wherein the liquid treatment apparatus includes at least one device for providing at at least one of the liquid outlets a blend of liquid led through the certain liquid treatment part with liquid led through the liquid treatment apparatus so as to bypass at least the certain liquid treatment part, data representative of a fraction of liquid in the blend led through the certain liquid treatment part are used to calculate the output data.

By blending the liquid led through the liquid treatment part with water that has bypassed the liquid treatment part and been treated to a lesser extent (or not at all) by a liquid treatment medium of the type included in the certain liquid treatment part, a particular degree of treatment can be set relatively easily. Liquid treatment apparatus of this type are commonly used to reduce the carbonate hardness of water by treating a fraction of the water in a liquid treatment part including ion exchange material in the hydrogen form. This treatment also makes the water more acid. It is then blended with water having essentially the original carbonate hardness, resulting in a mix. This may be done to achieve a compromise between carbonate hardness (leading to limescale in appliances connected to the liquid outlet) and acidity (leading to corrosion), i.e. to optimise the lifespan and/or frequency of maintenance of the appliance(s). It may also be done to meet a specification recommended by an industry body for the liquid to be provided to the appliance. An example would be a recommended range of values of the carbonate hardness for water to be used in brewing coffee or tea. One such body has specified a value of 3-6°dH, which can be set by blending decarbonised water with untreated water having a higher carbonate hardness.

The blending fraction (the proportion of the liquid at the outlet that has bypassed the certain liquid treatment part) characterises conditions local to the head device. It is generally unknown to a user or service provider. The first data, as mentioned, is independent of the local conditions. By using data representative of a fraction of liquid in the blend that has been led through the certain liquid treatment part to calculate the output data, account is taken of the fact that not all liquid that passes through the liquid treatment apparatus also passes through the certain liquid treatment part. In particular, the remaining volume of liquid that can still be delivered by the liquid treatment apparatus, as opposed to the remaining volume of liquid that can still pass through the certain liquid treatment part before the liquid treatment medium is exhausted, can be determined and provided as perceptible output. In an embodiment, the data representative of a

4

fraction of liquid in the blend led through the certain liquid treatment part and used to calculate the output data comprises a profile representing the development of the blending fraction over time. The profile may be based on an assumed development of the blending fraction as determined on the basis of at least one value of the measure of the concentration of components removable by the liquid treatment part in liquid received through the at least one liquid inlet and a target value of the measure for liquid provided at the liquid outlet. This is of use where the blending fraction is automatically controlled to achieve the target value and the efficacy of the liquid treatment part decreases as it nears the end of its useful life.

An embodiment of the method includes obtaining a value of a usage measure representative of one of a rate of exhaustion of the remaining capacity and a volumetric rate of flow through the head device, the value of the usage measure being based on at least one determination of the volumetric rate of flow through the head device, wherein obtaining the output data includes calculating a value of a use-based measure of a remaining lifetime of the liquid treatment cartridge, such that the value is proportional to the remaining capacity and inversely proportional to the usage measure.

A usage measure representative of a rate of exhaustion of the remaining capacity may be in terms of amount of substance per unit time. Such a usage measure may correspond to the rate at which components removable by the certain liquid treatment part pass through the liquid treatment apparatus. Where the components are those contributing to carbonate hardness, the usage measure is obtainable by multiplying the volumetric rate of flow through the liquid inlet or the liquid outlet by the concentration of minerals contributing to carbonate hardness. In the case of a liquid treatment apparatus including a device for providing a blend of liquid led through the certain liquid treatment part with liquid led through the liquid treatment apparatus such as to bypass at least the certain liquid treatment part, the usage measure may be obtainable by further multiplying the result of this multiplication by a factor based on the value of the blending fraction.

In an alternative in which the usage measure corresponds to a volumetric rate of flow through the liquid treatment apparatus, the method includes calculation steps at least equivalent to such multiplications. Obtaining the value of the usage measure thus includes multiplying the volumetric rate of flow by a value of the measure of the concentration of components removable by the liquid treatment part and, if necessary, by a factor based on the value of the blending fraction.

It is noted that the measured volumetric rate of flow through the liquid treatment apparatus may be the volumetric rate of flow of the total flow between the at least one liquid inlet and the at least one liquid outlet or of a fraction thereof, e.g. only the fraction led through the certain liquid treatment part or only the fraction bypassing the certain liquid treatment part. The factor is adapted appropriately, such that the calculation is equivalent to dividing the remaining capacity by the product of the volumetric rate of flow through the certain liquid treatment part and the concentration of components removable by the liquid treatment part.

It is further noted that the value of the usage measure may be the result of an algorithm for predicting the volumetric rate of flow on the basis of the determined volumetric rate of flow values. These determined values are each based on at least one value obtained from a flow meter. The values obtained from the flow meter are representative of volume counts or instantaneous volumetric rates of flow past or through the flow meter.

The use-based measure quantifies the length of a time period in terms of a number of units of time, e.g. days or weeks. The method may include at least one of enabling and causing at least one of the devices for implementing the user interface to provide the value of the use-based measure of the remaining lifetime of the liquid treatment cartridge as perceptible output.

In a variant, the value of the usage measure is based on a plurality of values of the usage measure, each pertaining to a certain one of successive time intervals and based on a respective determination of a volume flowing through the head device within the time interval concerned.

The time intervals need not be of exactly equal length. Generally, the time intervals will be of the order of twenty-four hours. The use of a plurality of values of the usage measure smoothes peaks and troughs in the consumption pattern of appliances downstream of the liquid treatment apparatus, such as might occur over the course of a single week, for example. It is also ensured that the assumed rate at which the capacity of the certain liquid treatment part is exhausted does not fluctuate with cycles in the use pattern of the appliance.

In a particular variant, the value of the usage measure used to determine a value of the use-based measure of the remaining lifetime is updated when a new value pertaining to a latest time interval is obtained, and updating includes calculating the updated value such as to depend more heavily on the new value than on values pertaining to preceding time intervals.

This variant allows the value of the usage measure used to determine the use-based measure of the remaining lifetime of the liquid treatment cartridge to be based on values pertaining to successive time intervals spanning a relatively large overall time period, yet still to reflect trends in a consumption pattern and/or in the composition of the liquid received at the liquid inlet and/or in the proportion of that liquid that is actually led through the certain liquid treatment part.

In an embodiment, the value of the usage measure used to determine a value of the use-based measure of the remaining lifetime is only updated if a length of the latest time interval exceeds a standard duration and is otherwise added to a value pertaining to a succeeding time interval.

This variant takes account of the fact that new values may become available at irregular intervals. The weighted average is obtained from values pertaining to intervals that have at least a minimum length, e.g. a minimum length corresponding to a minimum frequency at which new measurement data are arranged to become available. The need to adapt the weighting dynamically is thus avoided.

In an embodiment, the method includes tracking a duration of a presence of the liquid treatment cartridge in the liquid treatment apparatus to obtain a measure of a period of use of the liquid treatment cartridge, wherein obtaining the output data includes at least one of obtaining a time-based measure of the remaining lifetime of the liquid treatment cartridge based on the measure of the period of use and comparing a current value of the measure of the period of use with a maximum value of the period of use.

This embodiment is of particular use where the liquid is a potable liquid and a flow of liquid through the liquid treatment apparatus is intermittent or the rate of flow varies. It can be ensured that replacement of the liquid treatment cartridge is scheduled before microbiological contamination has reached unacceptable levels, even if the ion exchange material has not yet been exhausted.

A variant includes causing data representative of at least one of a value of the measure of the period of use and a point in time of first use to be read from a data storage device associated with the liquid treatment cartridge upon determining that the liquid treatment cartridge has been placed in the liquid treatment apparatus.

This allows brand-new liquid treatment cartridges to be distinguished from liquid treatment cartridges that have already been in use for some time in the same or a different liquid treatment apparatus when it is detected that a liquid treatment cartridge has been placed in the liquid treatment apparatus. When data representative of a point in time of first use is read out, the method may include determining an age of the liquid treatment cartridge based thereon and on a current point in time. This can help ensure that the liquid treatment cartridge is taken out of service before microbiological contamination becomes a risk. This is independent of any interruptions in the use of the liquid treatment cartridge after the point in time of first use, during which it is not in place in any liquid treatment apparatus but may still contain liquid. Where the period of use is tracked and recorded, only actual periods of use are counted. This is useful in ensuring that a replacement is scheduled before mechanical fatigue of a housing of the liquid treatment cartridge due to the pressure to which it is subjected by the liquid becomes an operational risk. Both alternative forms of data may be used in parallel.

A further variant includes obtaining data representative of the maximum value of the period of use of the liquid treatment cartridge, for example by causing the data representative of the maximum value of the period of use to be read from a data storage device associated with the liquid treatment cartridge.

The data representative of the maximum period of use may correspond to an initial value of the remaining period of use that is subsequently updated as time progresses. Where the data is read from a data storage device physically associated with the liquid treatment cartridge, the system implementing the method need only be provided with a device for reading data from the data storage device. Communication over a wide-area communications network is not necessary for monitoring the progression of the time-based measure of the remaining lifetime, nor is it necessary to maintain a database of all the different possible types of liquid treatment cartridge and their maximum lifespans.

A variant includes causing a perceptible output to be provided through the human-machine interface if the current value of the measure of the period of use exceeds one of the maximum value of the period of use and a value derived in a pre-determined manner from the maximum value of the period of use.

Thus, the need to replace the liquid treatment cartridge immediately or imminently is signalled directly to a user or service provider.

In an embodiment of the method including obtaining a value of a usage measure representative of one of a rate of exhaustion of the remaining capacity and a volumetric rate of flow through the head device, the value of the usage measure being based on at least one determination of the volumetric rate of flow through the head device, wherein obtaining the output data includes calculating a value of a use-based measure of a remaining lifetime of the liquid treatment cartridge, such that the value is proportional to the remaining capacity and inversely proportional to the usage measure, and further including tracking a duration of a presence of the liquid treatment cartridge in the liquid treatment apparatus to obtain a measure of a period of use of the liquid treatment cartridge, wherein obtaining output data includes at least one of obtaining a time-based measure of the remaining lifetime of the liquid treatment cartridge based on the measure of the period of use and comparing a current value of the measure of the period of use with a maximum value of the period of use, the method includes determining which of the time-based and the use-based measures of the remaining lifetime of the liquid treatment cartridge has a lower current value.

Only the lowest current value may be provided as perceptible output through the human-machine interface.

In an embodiment of the method, obtaining the first data includes causing data representative of a value of a measure of the remaining capacity to be read from a data storage device associated with the liquid treatment cartridge upon determining that the liquid treatment cartridge has been placed in the liquid treatment apparatus.

In case of as yet unused liquid treatment cartridges, the system implementing the method is thus provided with the initial capacity without the need to maintain a database of cartridge types and their associated capacities, communicate with a supplier over a wide-area communications network or obtain the information from a user. This minimises the risk of errors as well as simplifying the system and its use. It is also possible to make use of a liquid treatment cartridge placed in the liquid treatment apparatus after a period of previous use in the same or a different liquid treatment apparatus and still predict relatively accurately when it will reach the end of its useful life. The remaining capacity can be determined only from the measure read out, optionally in combination with one or more pre-agreed constants.

An embodiment of the method includes calculating an updated value of a measure of the remaining capacity, and causing the updated value of the measure of the remaining capacity to be recorded in a data storage device associated with the liquid treatment cartridge.

The system implementing this embodiment will generally carry out these steps automatically, so that it can at least be ensured that the liquid treatment apparatus is not operated beyond the end of its useful life, even if temporarily removed from the liquid treatment apparatus or move between different liquid treatment apparatus.

According to another aspect, the monitoring system according to the invention is characterised in that the system is configured to obtain the output data by using the first and second data to calculate a value of at least one parameter such that the value is proportional to the remaining capacity and inversely proportional to the measure of the concentration of components removable by the liquid treatment part.

The system carries out a division as a distinct calculation or a calculation of which the result is proportional to the remaining capacity and inversely proportional to the concentration. It thus obtains location-independent data characterising the state of the liquid treatment cartridge and uses information characterising the conditions of its use in a particular liquid treatment apparatus to enable a prediction to be made of when the liquid treatment cartridge is to be replaced.

In a variant, the second data is obtained through an interface to a system including a device for measuring the parameter of liquid led through the head device, wherein the parameter is a parameter determined at least in part by the concentration of components removable by the liquid treatment part in liquid received through the at least one inlet.

The monitoring system may be configured to cause the at least one device for implementing the human-machine interface to provide the perceptible output. Alternatively, it may enable it to do so at a time determined by the device or devices.

In an embodiment, the system is configured to execute a method according to the invention.

According to another aspect, the liquid treatment apparatus according to the invention includes:

a replaceable liquid treatment cartridge including at least one liquid treatment part including at least an amount of ion exchange material;
a head device for receiving the replaceable liquid treatment cartridge, the head device including at least one liquid inlet and at least one liquid outlet and being arranged to conduct at least a fraction of liquid received through the at least one liquid inlet to at least one of the liquid outlets via the liquid treatment cartridge such as to pass through at least a certain one of the liquid treatment parts; and
a monitoring system according to the invention.

An embodiment of the liquid treatment apparatus further includes the measurement system.

According to another aspect of the invention, there is provide a computer program including a set of instructions capable, when incorporated in a machine-readable medium, of causing a system having information processing capability to execute a method according to the invention.

The invention will be explained in further detail with reference to the accompanying drawings, in which:

Fig. 1 is a schematic diagram of a liquid treatment apparatus with a replaceable liquid treatment cartridge and a system for monitoring its use; and

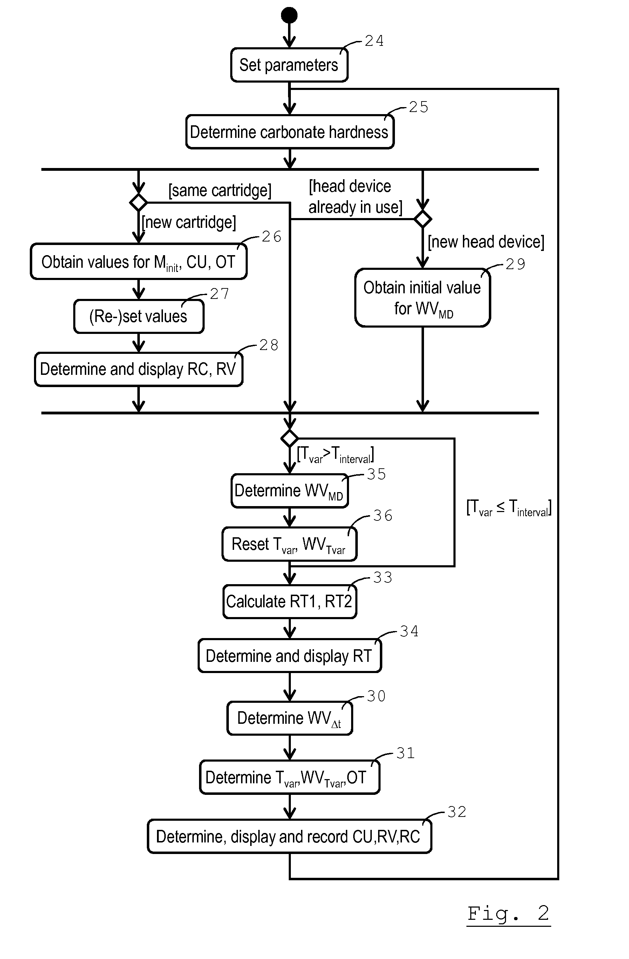

Fig. 2 is a flow chart illustrating steps in a method of monitoring the use of the liquid treatment cartridge.

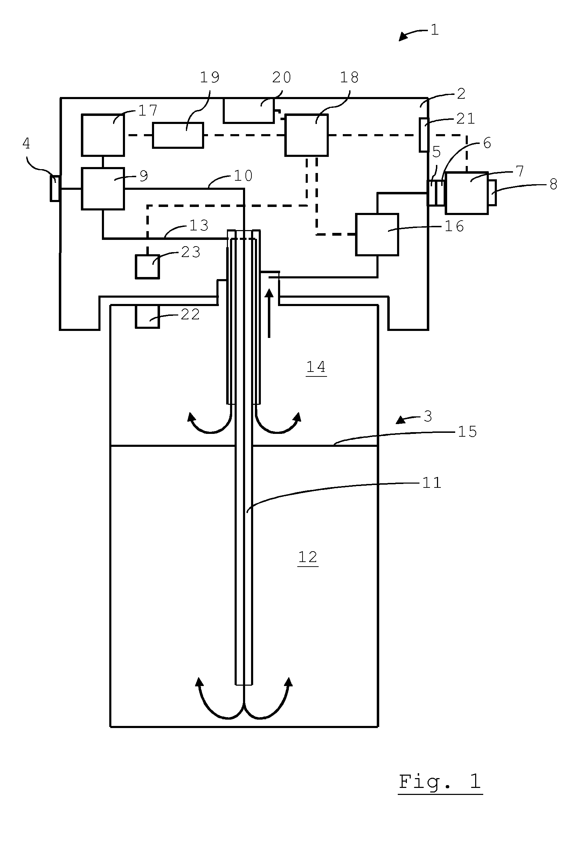

A liquid treatment apparatus 1 (Fig. 1) as described below by way of example includes a filter head 2 and a replaceable liquid treatment cartridge 3. The liquid treatment apparatus 1 is suitable for treating mains water by softening (reducing or removing components contributing to total hardness) or decarbonising (reducing or removing components contributing to carbonate hardness, also referred to as temporary hardness) the water. Here, the example of decarbonising will be used to explain the operation of the liquid treatment apparatus 1.

The filter head 2 includes an inlet 4 for connection to a supply of liquid to be treated. The filter head 2 also includes an outlet 5. In the illustrated example, the outlet 5 is connected to an inlet 6 of a sensor device 7. An outlet 8 of the sensor device 7 is connectable to an appliance (not shown) or a conduit leading to one or more appliances. At least one of the appliances may be an appliance for preparing and dispensing a beverage. In particular, the appliance may be an appliance for preparing and dispensing a hot beverage, e.g. by extraction. Examples include coffee makers and espresso makers of the type found in restaurants, cafés and coffee bars.

In an alternative embodiment, the sensor device 7 is integrated in the filter head 2, so that the outlet 5 is directly connectable to the appliance or a conduit leading to one or more appliances.

In use, liquid to be treated is led from the inlet 4 to a variable-ratio flow divider 9. From there, a first fraction of the liquid to be treated passes through a first conduit 10 to an inlet of the liquid treatment cartridge 3 that leads to a fall tube 11. The liquid to be treated is conducted down the fall tube 11 to a first liquid treatment part comprising a first bed 12 of liquid treatment medium. The liquid treatment medium includes at least one type of ion exchange resin, in particular a cation exchange resin in the hydrogen form. The cation exchange resin may be of the weakly acidic type. At least initially, the liquid treatment medium is effective to remove all components contributing to carbonate hardness from water led through the first bed 12. Calcium and magnesium ions are removed from water in exchange for hydrogen ions. The hydrogen ions react with carbonate and hydrogen carbonate ions to form carbon dioxide and water. As a result, the total ion concentration is reduced, causing a change in the electrical conductivity of the water. The pH of the water is also reduced.

A second fraction of the liquid received at the inlet 4 is led from the variable-ratio flow divider 9 through a second conduit 13 in the filter head 2 to a second inlet of the liquid treatment cartridge 3, separate from the first inlet. This liquid passes straight to a second liquid treatment part formed by a second bed 14 of liquid treatment medium. It bypasses the first bed 12. By way of example, it will be assumed that the second bed 14 does not contain any cation exchange material. It may comprise activated carbon, for example. In an alternative embodiment, at least one of the depth and composition of the second bed 14 is such that the carbonate hardness of water bypassing the first bed 12 to pass only through the second bed 14 is reduced to a lesser extent than that of water passing through both the first and second beds 12,14.

The first and second beds 12,14 are separated by a liquid-permeable barrier 15 such as a mesh, a fleece, a grid or a combination thereof. Thus, liquid that has been provided to the liquid treatment cartridge 3 through the second conduit 13 passes from the first liquid treatment part into the second liquid treatment part. There, it is blended with the liquid that has been provided to the liquid treatment cartridge 3 through the second conduit 13. The resulting mix is led back to the filter head 2 through an outlet of the replaceable liquid treatment cartridge 3. It passes to the outlet 5 via a flow meter 16.

The liquid provided at the outlet 5 is thus a blend of liquid led through the first liquid treatment part with liquid led through the liquid treatment apparatus 1 so as to bypass the first liquid treatment part.

The fraction of the total volume of water passing from the inlet 4 to the outlet 5 per unit of time that has been led through the second liquid treatment part such as to bypass the first liquid treatment part is referred to as the blending fraction x. Its value is determined by the settings of the variable-ratio flow divider 9. These settings can be adjusted by an actuator 17 including an electric motor, e.g. a stepper motor or a servo motor. The actuator 17 is controlled by a data processing device 18 through an appropriate interface 19. The data processing device 18 has access to data correlating settings of one or both of the variable-ratio flow divider 9 and the actuator 17 with the blending fraction x. It is thus able to determine the current value of the blending fraction x, if and when required.

The filter head 2 also includes a device 20 for implementing an external interface. In an embodiment, this interface is a human-machine interface, so that the device 20 comprises a device for providing a perceptible output to a user. In the example used herein, it will be assumed that the device 20 includes a display device for displaying information to a user. The device 20 may additionally or alternatively include a device for providing audible output, including warning signals or spoken information. Where the filter head 2 is intended for placement in a relatively inaccessible place, e.g. a cellar, it is useful if the device 20 is provided in the form of a network interface device or comprises a network interface device for communicating information to a remote device (not shown) providing the user interface. Such a remote device may be a dedicated device or a programmed general-purpose computing device such as a handheld computer (tablet computer, smart phone or the like). The communications network may be a wide area network or a local area network. It may in particular comprise a wireless network.

The filter head 2 further includes an interface 21 to the sensor device 7. This enables the data processing device 18 to obtain a signal representative of one of the electrical conductivity of liquid passing through the sensor device 7 and electrical conductivity adjusted for deviations from a standard temperature (e.g. 25° C). The adjustment takes account of the fact that the electrical conductivity of water for a given ion concentration varies with temperature. In an alternative embodiment, the data processing device 18 receives a temperature signal from a thermometer (not shown) and carries out the correction. Obtaining a corrected value from the sensor device allows the temperature used for the adjustment to correspond more closely to the temperature of the water passing through the sensor device 7.

The electrical conductivity of water at the location of the sensor device 7 is dependent on the electrical conductivity of untreated water as received at the inlet 4, on the blending fraction x and on the electrical conductivity of water directly downstream of the first bed 12 of liquid treatment medium, assuming that the second bed 14 does not alter the electrical conductivity at all. Let the electrical conductivity of the untreated water be $s_0$ and the electrical conductivity of the water at the location of the liquid-permeable barrier 15 be $s_1$. The difference in electrical conductivity $\Delta s = s_0 - s_1$ is

due to the elimination of carbonate hardness in the first liquid treatment part. For a given blending fraction x, the electrical conductivity *s(x)* at the location of the sensor device 7 can be expressed as follows:

$$s(x) = x \cdot s_0 + (1-x) \cdot s_1 = (s_0 - s_1) \cdot x + s_1 = \Delta s \cdot x + s_1. \qquad (1)$$

An approximation of the derivative s'(x) of the electrical conductivity *s* with respect to the blending fraction x gives a relatively good estimate of the change $\Delta s$ in electrical conductivity due to the treatment by the first liquid treatment part. Assuming that the first liquid treatment part is arranged only to remove all components contributing to carbonate hardness, this value $\Delta s$ can be converted directly into a measure of the carbonate hardness of the untreated water. The data processing device 18 is arranged to carry out such a determination of the derivative *s'(x)* by adjusting the settings of the variable-ratio flow divider 9 and obtaining the associated values of the electrical conductivity (preferably adjusted for deviations from the reference temperature) from the sensor device 7. It is able to relate the adjusted settings with resulting values of the blending fraction x. In this way, it can determine a value for $\Delta s$. It converts this value into a value CH for the carbonate hardness with the aid of a fixed or variable factor stored in memory. Further details of the determination of the carbonate hardness are provided in WO 2014/033145 A1, WO 2014/006128 A1 and WO 2014/033147 A1, the contents of which are hereby incorporated by reference.

The data processing device 18 is further arranged to control the actuator 17 to attain a target value of the carbonate hardness of the blend of water provided at the outlet 5. Details of a particular example of how this may be implemented are provided in WO 2014/048862 A2, the contents of which are hereby incorporated by reference.

The data processing device 18 is also part of a system for monitoring use of the liquid treatment cartridge 3 to determine when it requires replacement. The monitoring method makes use of data stored in a machine-readable data storage device 22. The data storage device 22 is comprised in a tag that is physically associated with the liquid treatment cartridge 3. The filter head 2 includes a read/write device 23 for reading data from the data storage device 22 and writing data to it. The read/write device 23 operates under the control of and exchanges data with the data processing device 18. In the illustrated embodiment, the exchange of data between the read/write device 23 and the data storage device 22 is effected wirelessly. The data storage device 22 may be an RFID (Radio-Frequency Identification) device, for example. In this case, the RFID tag will generally be of the passive kind, power being supplied to it only by the signal received from the read/write device 23. The read/write device 23 is controlled periodically to send an interrogation signal and to wait for a response, in order to determine whether a liquid treatment cartridge 3 is present in the liquid treatment apparatus 1. The response will generally include an identifier of the liquid treatment cartridge 3. In this way, the filter head 2 can detect the placement of a liquid treatment cartridge 3.

In the illustrated embodiment, the monitoring method implemented by the monitoring system comprising the data processing device 18 involves a number of parameters.

A first parameter is the remaining lifetime RT of the liquid treatment cartridge. This parameter has a value representing a number of units of time, in this example a number of days. In an alternative embodiment, it is expressed as a number of weeks. Internally, the data processing device 18 tracks the development of both a time-based measure $RT_1$ of the remaining lifetime and a use-based measure $RT_2$ of the remaining lifetime, in addition to tracking an operating time *OT*. The use-based measure $RT_2$ of the remaining lifetime is based on the treatment capacity of the liquid treatment cartridge 3 and the average rate at which liquid passes through the liquid treatment apparatus, as well as on the properties of the untreated liquid. The operating time *OT* is the cumulative time for which the liquid treatment cartridge 3 has been in use. A maximum operating time $OT_{max}$ corresponds to the maximum duration of use specified by a manufacturer of the liquid treatment cartridge 3. This maximum operating time $OT_{max}$ is based on considerations of hygiene. The time-based measure of the remaining lifetime $RT_1$ corresponds to the difference between the maximum operating time $OT_{max}$ and the current value of the operating time *OT*.

A further parameter is a remaining treatable volume RV, being the volume of water meeting requirements that can still be supplied through the outlet 5 before the current liquid treatment cartridge 3 requires replacement. This parameter is expressed in litres, for example.

Another parameter is a capacity utilisation CU, defined as the fraction of an initially available treatment capacity $M_{init}$ of the liquid treatment cartridge (more particularly the first liquid treatment part) that has been exhausted. This parameter has a dimensionless value between zero and one. The initially available capacity $M_{init}$ is expressed in terms of amount of substance, having the unit moles or mg Ca equivalent, for example. It may in particular be representative of the number of active sites still available for the intended ion exchange (i.e. the removal of calcium or magnesium in exchange for hydrogen). Further related to this is a remaining capacity RC, expressed as a percentage value. This is related to the capacity utilisation as follows:

$$RC = (1 - CU) \cdot 100\% . \qquad (2)$$

The data processing device 18 is configured to determine the remaining lifetime RT as soon as possible upon expiry of a time interval of a certain standard duration $T_{standard}$, in this example twenty-four hours. It need not, however, be the case that measurements are obtainable exactly once at the begging and once at the end of each of consecutive time intervals of exactly the standard duration $T_{standard}$. The system therefore also determines a duration $\Delta t$ of a time period between measurements, as well as the volume $WV_{\Delta t}$ of liquid that has passed through the flow meter 16 within this time period. Two or more successive ones of these time periods may be concatenated to form a time interval of variable duration $T_{var}$, with the associated volumes being summed to yield a volume $WV_{Tvar}$ pertaining to this time interval of variable duration $T_{var}$.

Values of the remaining treatable volume RV and the use-based measure $RT_2$ of the remaining lifetime of the liquid treatment cartridge 3 are calculated on the basis of a multi-day average, for which purpose values of an average volume $WV_{MD}$ per time interval of standard duration $T_{standard}$ are determined. The average is a weighted average, based on a plurality of values of the volume $WV_{Tvar}$ associated with respective consecutive time intervals of variable duration $T_{var}$, each equal to or slightly longer than the standard duration $T_{standard}$. The most recent values are weighted more heavily. The weighting is determined by a parameter referred to herein as the averaging period, which corresponds to a multiple of the length of the time period of standard duration $T_{standard}$. In the present example, it will be assumed that the time period of standard duration $T_{standard}$ is a day (24 hours), so that the averaging period is expressed as a number $N_{days}$ of days. The number $N_{days}$ of days per averaging period may be a variable or a constant.

When first executed (e.g. after the filter head 2 has first been installed or optionally after it has been reset), the monitoring method commences (step 24) with the setting of parameters including the number of days $N_{days}$ to use in determining an average daily volume $WV_{MD}$ of liquid treatment and the maximum operating time $OT_{max}$ of the liquid treatment cartridge 3. In one variant, the latter value is read from the data storage device 22. In another variant, it is input by a user through a human-machine interface implemented by the external interface device 20. In yet another variant, a type identifier is read from the data storage device 22 or obtained as user input and then used to look up an appropriate value in a database internal or external to the filter head 2. It is also possible for a value read from the data storage device 22 to be modified according to a rule reflecting local circumstances such as the quality of the mains water or the type of premises on which the liquid treatment apparatus 1 is being operated.

This step 24 also includes setting to zero the value of the parameters of the length of the current time interval of variable duration $T_{var}$ and of the associated volume $WV_{Tvar}$.

Apart from the initial step 24, the method is an iterative method. The iterations may, for example, be carried out at regular intervals.

Each iteration commences with a determination of the carbonate hardness CH of the liquid received at the inlet 4 in the manner explained above (step 25).

If the liquid treatment cartridge 3 is not the same one as in the previous iteration, this is detected and certain data are caused to be read from the data storage device 22 (step 26). These include first data representative of a measure of the remaining capacity of the first liquid treatment part in terms of an amount of substance. In this example, the first data are formed by the initial capacity $M_{init}$ in combination with the capacity utilisation *CU*. The product of the initial capacity $M_{init}$ and the difference between one and the value of the capacity utilisation CU is the remaining capacity of the first liquid treatment part in terms of an amount of substance.

The corresponding values of the capacity utilisation CU and the initial capacity $M_{init}$ as maintained in memory in the filter head 2 are then (step 27) set to the value read out in the preceding step 26. If the liquid treatment cartridge 3 has not been used before in any liquid treatment apparatus 1, the value of the operating time *OT* is set to zero or a value of zero is read out. Otherwise, a value is read out from the data storage device 22, which is increased in the course of executing the method to reflect further operating time. In yet another embodiment, the preceding step 26 includes reading out an identification of a point in time of first use (e.g. date and time of day) of the liquid treatment cartridge 3. The value of the operating time OT is then calculated as the length of time between the current point in time and the point in time of first use in this step 27.

Next (step 28), the remaining capacity RC is calculated in accordance with equation (2) and caused to be displayed via a human-machine interface, using the device 20 for implementing this interface. The remaining treatable volume *RV* is also displayed in this step 28. The remaining treatable volume *RV* is determined on the basis of the carbonate hardness CH determined in the first step 25 of the current iteration, the initial capacity $M_{init}$, the remaining capacity RC and the current value of the blending fraction x, such as to be proportional to the initial capacity $M_{init}$ and the remaining capacity RC, but inversely proportional to the difference between one and the blending fraction x and to the carbonate hardness *CH*:

$$RV \propto \frac{M_{init} \cdot RC}{(1-x) \cdot CH}. \qquad (3)$$

In parallel, it is determined whether a value for the multi-day average volume $WV_{MD}$ is available. If the filter head 2 is new or has been reset, then it would not be available and a value to initialise this variable is obtained (step 29). In the example provided herein, this initial value is based on the initial capacity $M_{init}$, the maximum operating time $OT_{MAX}$ and the carbonate hardness CH as determined in the first step 25 of the current iteration. A conversion factor is used to convert carbonate hardness into an amount of substance where it is not already expressed as a molar concentration.

The data processing device 18 checks whether the current value of the variable-length time interval duration $T_{var}$ exceeds the standard duration $T_{standard}$. If it does not, then a further iteration is required before a new value of the multi-day average volume $WV_{MD}$ can be calculated.

Instead, a step 30 involves determining the duration $\Delta t$ of the current time period between measurements and the volume of liquid $WV_{\Delta t}$ that has flowed in that time period. Thereupon, the value of the length of the current time interval of variable duration $T_{var}$ is updated (step 31) by adding to it the duration $\Delta t$ of the time period between measurements, and the value of the associated volume $WV_{Tvar}$ of liquid is updated by adding the volume of liquid $WV_{\Delta T}$ determined in the preceding step 30. The duration $\Delta t$ of the time period between measurements is also added to the operating time $OT$:

$$T_{var} := T_{var} + \Delta t, \qquad (4)$$

$$WV_{Tvar} := WV_{Tvar} + WV_{\Delta t}, \qquad (5)$$

$$OT := OT + \Delta t. \qquad (6)$$

In a last step 32 in the current iteration, new values of the capacity utilisation $CU$, the remaining treatable volume $RV$ and the remaining capacity $RC$ are calculated and caused to be displayed. At least the new values of the capacity utilisation $CU$ and of the operating time $OT$ are also caused to be written to the data storage device 22 associated with the liquid treatment cartridge 3. The capacity utilisation $CU$ and remaining treatable volume $RV$ are obtained as follows:

$$CU := CU + \frac{WV_{Tvar} \cdot F \cdot CH}{M_{init}}, \qquad (7)$$

$$RV = M_{init} \cdot (1 - CU)/(F \cdot CH), \qquad (8)$$

where $F$ is a conversion factor for converting carbonate hardness into an amount of substance (e.g. a value expressed in degrees German Hardness [°dH] into a value expressed in moles per litre or cubic metres). The remaining capacity $RC$ is calculated in accordance with equation (2).

The step 30 of determining the volume $WV_{\Delta T}$ flowing in the time period between measurements is preceded by steps 33,34 in which new values of the time-based and the use-based measures $RT_1, RT_2$ of the remaining lifetime of the liquid treatment cartridge 3 are calculated and the remaining lifetime $RT$ is caused to be displayed.

The time-based measure $RT_1$ of the remaining lifetime is determined as follows:

$$RT_1 = OT_{max} - OT. \qquad (9)$$

The use-based measure $RT_2$ of the remaining lifetime is determined as follows:

$$RT_2 = N_{days} \left. RV \middle/ WV_{MD} \right. \cdot \tag{10}$$

The new value of the remaining lifetime $RT$ is the smaller of the values of the two measures $RT_1, RT_2$ of the remaining lifetime.

In a variant, the values of the measures $RT_1, RT_2$ are divided by seven to express the measures in terms of weeks, rather than days. This may also be done as part of the step of causing the value of the remaining lifetime $RT$ to be displayed. A smaller display is required, assuming the value resulting from the division is rounded.

If it has been determined that the current value of the length of the time interval of variable duration $T_{var}$ exceeds the standard duration $T_{standard}$ (i.e. 24 hours in this example), a new value of the multi-day average volume $WV_{MD}$ per period of standard duration $T_{standard}$ is calculated (step 35). The parameters for tracking the length of the current time period of variable duration $T_{var}$ and the volume $WV_{Tvar}$ that has flowed in this period are then also reset to zero (step 36) before the remaining lifetime is determined.

The calculation step 35 involves the following operation:

$$WV_{MD} := \left. \left( WV_{MD} + WV_{Tvar} \right) \cdot N_{days} \middle/ \left( N_{days} + T_{var} \right) \right. \cdot \tag{11}$$

It will be appreciated that this average value thus depends more heavily on the volume $WV_{Tvar}$ that has flowed in the latest time period of variable duration $T_{var}$ than on the volumes obtained for previous time periods. The number $N_{days}$ essentially determines the relative weightings.

Where the step 35 of calculating the average volume $WV_{MD}$ per time period of standard duration $T_{standard}$ and the subsequent step 36 of resetting the parameters for tracking the length of the time period of variable duration $T_{var}$ and the associated volume $WV_{Tvar}$ are carried out, these precede the steps 33,34 used to present a new value of the remaining lifetime to a user or service provider. They are thus provided with an updated value with each first iteration following expiry of a time period of standard duration $T_{standard}$. The value is caused to be displayed to facilitate the scheduling of the next replacement of the liquid treatment cartridge 3.

The invention is not limited to the embodiments described above, which may be varied within the scope of the accompanying claims. For example, instead of using the capacity utilisation $CU$, i.e. the fraction of the initial capacity $M_{init}$ already exhausted, in its calculations, the data processing device 18 may use a value corresponding to a remaining fraction of the initial capacity $M_{init}$ available for treatment. Equally, the remaining operating time $(OT_{max}-OT)$ may be tracked and recorded instead of the elapsed operating time $OT$.

## List of reference numerals

| | |
|---|---|
| 1 | - liquid treatment apparatus |
| 2 | - filter head |
| 3 | - liquid treatment cartridge |
| 4 | - inlet |
| 5 | - outlet |
| 6 | - sensor device inlet |
| 7 | - sensor device |
| 8 | - sensor device outlet |
| 9 | - flow divider |
| 10 | - first conduit |
| 11 | - fall tube |
| 12 | - first bed of liquid treatment medium |
| 13 | - second conduit |
| 14 | - second bed of liquid |
| 15 | - liquid-permeable barrier |
| 16 | - flow meter |
| 17 | - actuator |
| 18 | - data processing device |
| 19 | - actuator control interface |

(continued)

| 20 | - device for implementing an external interface |
| 21 | - interface to sensor device |
| 22 | - data storage device |
| 23 | - read/write device |
| 24 | - step (set parameters) |
| 25 | - step (determine carbonate hardness) |
| 26 | - step (obtain values for $M_{init}$, CU, OT) |
| 27 | - step (reset values) |
| 28 | - step (determine and display RC, RV) |
| 29 | - step (obtain initial value for $WV_{MD}$) |
| 30 | - step (determine $WV_{\Delta T}$) |
| 31 | - step (determine $T_{var}$, $WV_{Tvar}$, OT) |
| 32 | - step (determine, display and record CU,RV,RC) |
| 33 | - step (calculate $RT_1$,$RT_2$) |
| 34 | - step (determine and display RT) |
| 35 | - step (determine $WV_{MD}$) |
| 36 | - step (reset $T_{var}$, $WV_{Tvar}$) |

**Claims**

1. Method of monitoring the operation of a liquid treatment apparatus (1) including
a replaceable liquid treatment cartridge (3) including at least one liquid treatment part (12) including at least an amount of ion exchange material; and
a head device (2) for receiving the replaceable liquid treatment cartridge (3), the head device (2) including at least one liquid inlet (4) and at least one liquid outlet (5) and being arranged to conduct at least a fraction of liquid received through the at least one liquid inlet (4) to at least one of the liquid outlets (5) via the liquid treatment cartridge (3) such as to pass through at least a certain one of the liquid treatment parts (12), the method including:

obtaining first data ($M_{init}$,RC), the first data ($M_{init}$,RC) being representative of a remaining capacity of the certain liquid treatment part (12) in terms of an amount of substance,
obtaining second data (CH) including data representative of a value at at least one point in time of a measure of a concentration of components removable by the liquid treatment part (12) in liquid received through the at least one liquid inlet (4),
obtaining output data (RC,RV,RT,OT), and
causing a device (20) for implementing a human-machine interface to provide perceptible output pertaining to replacement of the liquid treatment cartridge (3) and based on at least some of the output data (RC,RV,RT,OT),
**characterised in that**
obtaining the output data (RC,RV,RT,OT) includes using the first and second data (CH) to calculate a value of at least one parameter ($RV,RT_2$) such that the value is proportional to the remaining capacity and inversely proportional to the measure of the concentration of components removable by the liquid treatment part.

2. Method according to claim 1,
wherein obtaining the output data (RC,RV,RT,OT) includes determining a value of a remaining treatable volume (RV) of liquid providable through the at least one liquid outlet (5), and
at least one of enabling and causing the value of the remaining treatable volume (RV) to be provided as perceptible output through the human-machine interface.

3. Method according to claim 1 or 2,
wherein the liquid treatment apparatus (1) includes at least one device (9) for providing at at least one of the liquid outlets (5) a blend of liquid led through the certain liquid treatment part (12) with liquid led through the liquid treatment apparatus (1) so as to bypass at least the certain liquid treatment part (12), and
wherein data representative of a fraction (x) of liquid in the blend led through the certain liquid treatment part (12) are used to calculate the output data (RC,RV,RT,OT).

4.  Method according to any one of the preceding claims,
    including obtaining a value ($WV_{MD}$) of a usage measure representative of one of a rate of exhaustion of the remaining capacity and a volumetric rate of flow through the head device (2),
    the value ($WV_{MD}$) of the usage measure being based on at least one determination of the volumetric rate of flow through the head device (2),
    wherein obtaining the output data ($RC,RV,RT,OT$) includes calculating a value of a use-based measure ($RT_2$) of a remaining lifetime of the liquid treatment cartridge (3), such that the value is proportional to the remaining capacity ($RC$) and inversely proportional to the usage measure ($WV_{MD}$).

5.  Method according to claim 4,
    wherein the value ($WV_{MD}$) of the usage measure is based on a plurality of values ($WV_{Tvar}$) of the usage measure, each pertaining to a certain one of successive time intervals and based on a respective determination of a volume flowing through the head device (2) within the time interval concerned.

6.  Method according to claim 5,
    wherein the value ($WV_{MD}$) of the usage measure used to determine a value of the use-based measure ($RT_2$) of the remaining lifetime is updated when a new value ($WV_{Tvar}$) pertaining to a latest time interval is obtained, and
    wherein updating includes calculating the updated value ($WV_{MD}$) such as to depend more heavily on the new value than on values pertaining to preceding time intervals.

7.  Method according to claim 6,
    wherein the value ($WV_{MD}$) of the usage measure used to determine a value of the use-based measure ($RT_2$) of the remaining lifetime is only updated if a length ($T_{var}$) of the latest time interval exceeds a standard duration ($T_{standard}$) and is otherwise added to a value ($WV_{\Delta t}$) pertaining to a succeeding time interval.

8.  Method according to any one of the preceding claims, including
    tracking a duration of a presence of the liquid treatment cartridge (3) in the liquid treatment apparatus (1) to obtain a measure *(OT)* of a period of use of the liquid treatment cartridge (3),
    wherein obtaining the output data ($RC,RV,RT,OT$) includes at least one of obtaining a time-based measure ($RT_1$) of the remaining lifetime of the liquid treatment cartridge (3) based on the measure *(OT)* of the period of use and comparing a current value of the measure *(OT)* of the period of use with a maximum value ($OT_{max}$) of the period of use.

9.  Method according to claim 8, including
    causing data representative of at least one of a value of the measure *(OT)* of the period of use and a point in time of first use to be read from a data storage device (22) associated with the liquid treatment cartridge (3) upon determining that the liquid treatment cartridge (3) has been placed in the liquid treatment apparatus (1).

10. Method according to any one of claims 4-7 and any one of claims 8-9, including
    determining which of the time-based and the use-based measures ($RT_1,RT_2$) of the remaining lifetime of the liquid treatment cartridge (3) has a lower current value.

11. System for monitoring the operation of a liquid treatment apparatus (1),
    the liquid treatment apparatus (1) including:

    a replaceable liquid treatment cartridge (3) including at least one liquid treatment part (12) including at least an amount of ion exchange material; and
    a head device (2) for receiving the replaceable liquid treatment cartridge (3), the head device including at least one liquid inlet (4) and at least one liquid outlet (5) and being arranged to conduct at least a fraction of liquid received through the at least one liquid inlet (4) to at least one of the liquid outlets (5) via the liquid treatment cartridge (3) such as to pass through at least a certain one of the liquid treatment parts (12),
    wherein the system includes:

    an interface for receiving first data ($M_{init}$,$RC$), the first data ($M_{init}$,$RC$) being representative of a remaining capacity of the certain liquid treatment part (12) in terms of an amount of substance;
    an interface to a system for obtaining values of a parameter of liquid led through the head device (2), the data provided through the interface enabling the monitoring system to obtain second data including data representative of a value at at least one point in time of a measure of the concentration of components removable by the liquid treatment part (12) in liquid received through the at least one liquid inlet (4);

an interface to a device for implementing a human-machine interface; and
a data processing device,
wherein the system is configured to obtain output data and to enable the device for implementing the human-machine interface to provide perceptible output pertaining to replacement of the liquid treatment cartridge (3) and based on at least some of the output data, **characterised in that**
the system is configured to obtain the output data by using the first and second data (CH) to calculate a value of at least one parameter ($RV,RT_2$) such that the value is proportional to the remaining capacity and inversely proportional to the measure of the concentration of components removable by the liquid treatment part.

12. System according to claim 11, configured to execute a method according to any one of claims 1-10.

13. Liquid treatment apparatus (1), including:

a replaceable liquid treatment cartridge (3) including at least one liquid treatment part (12) including at least an amount of ion exchange material;
a head device (2) for receiving the replaceable liquid treatment cartridge (3), the head device (2) including at least one liquid inlet (4) and at least one liquid outlet (5) and being arranged to conduct at least a fraction of liquid received through the at least one liquid inlet (4) to at least one of the liquid outlets (5) via the liquid treatment cartridge (3) such as to pass through at least a certain one of the liquid treatment parts (12); and
a monitoring system according to claim 11 or 12.

14. Liquid treatment apparatus (1) according to claim 13,
further including the measurement system.

15. Computer program including a set of instructions capable, when incorporated in a machine-readable medium, of causing a system having information processing capability to execute a method according to any one of claims 1-10.

Fig. 1

Fig. 2

Europäisches
Patentamt

European
Patent Office

Office européen
des brevets

**EUROPEAN SEARCH REPORT**

Application Number

EP 14 17 1480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/224422 A1 (MORETTO MAURIZIO [IT]) 13 October 2005 (2005-10-13) * figures 1-6 * * paragraph [0002] * * paragraph [0009] - paragraph [0031] * ----- | 1-15 | INV. C02F1/00 ADD. C02F1/42 C02F1/28 |
| A | US 2011/132818 A1 (DOPSLAFF CARSTEN [DE] ET AL) 9 June 2011 (2011-06-09) * the whole document * ----- | 1-15 | |
| A | WO 03/084875 A1 (MECOSWISS MECHANISCHE COMPONEN [DE]; SCHROTT HARALD [DE]; WAWRLA ANDRE) 16 October 2003 (2003-10-16) * the whole document * ----- | 1-15 | |
| A | US 2007/295665 A1 (AYALA RAUL EDUARDO [US] ET AL) 27 December 2007 (2007-12-27) * the whole document * ----- | 1-15 | |

TECHNICAL FIELDS
SEARCHED (IPC)

C02F

The present search report has been drawn up for all claims

| Place of search | Date of completion of the search | Examiner |
|---|---|---|
| The Hague | 24 November 2014 | Zsigmond, Zoltán |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.................................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 14 17 1480

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2014

| Patent document cited in search report | | Publication date | Patent family member(s) | | Publication date |
|---|---|---|---|---|---|
| US 2005224422 | A1 | 13-10-2005 | CA | 2475198 A1 | 08-10-2005 |
| | | | CN | 1679995 A | 12-10-2005 |
| | | | JP | 5030125 B2 | 19-09-2012 |
| | | | JP | 2005296919 A | 27-10-2005 |
| | | | US | 2005224422 A1 | 13-10-2005 |
| | | | US | 2008035582 A1 | 14-02-2008 |
| US 2011132818 | A1 | 09-06-2011 | AU | 2009281509 A1 | 18-02-2010 |
| | | | CA | 2731694 A1 | 18-02-2010 |
| | | | CN | 102105405 A | 22-06-2011 |
| | | | EP | 2323953 A1 | 25-05-2011 |
| | | | JP | 5433001 B2 | 05-03-2014 |
| | | | JP | 2011530395 A | 22-12-2011 |
| | | | NZ | 590845 A | 31-08-2012 |
| | | | RU | 2011108484 A | 20-09-2012 |
| | | | US | 2011132818 A1 | 09-06-2011 |
| | | | WO | 2010017792 A1 | 18-02-2010 |
| WO 03084875 | A1 | 16-10-2003 | AU | 2003233929 A1 | 20-10-2003 |
| | | | CN | 1646434 A | 27-07-2005 |
| | | | DE | 10214846 A1 | 16-10-2003 |
| | | | DE | 10391197 D2 | 03-03-2005 |
| | | | EP | 1490302 A1 | 29-12-2004 |
| | | | US | 2006011523 A1 | 19-01-2006 |
| | | | WO | 03084875 A1 | 16-10-2003 |
| US 2007295665 | A1 | 27-12-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014033145 A1
- WO 2014006128 A1
- WO 2014033147 A1
- WO 2014048862 A2